# EUROPEAN PATENT APPLICATION

(11) **EP 4 653 398 A1**
(43) Date of publication of application: **26.11.2025**
(21) Application number: 23917352.9
(22) Date of filing: 28.12.2023
(51) Int. Cl.: C02F 1/48

(54) **METHOD AND DEVICE FOR IMPROVING THE TRANSPORT OF BRINE WITH CALCIUM SULPHATE IN MINING INDUSTRY PRODUCTION LINES**

(30) Priority: 17.01.2023 ES 202330028
(71) Applicant: Millan Alonso, Alejandro, 28223 Pozuelo de Alarcon (Madrid) (ES)
(72) Inventor: GARRIDO ARIAS, Borja, 28223 Pozuelo de Alarcon (MADRID) (ES); MILLAN ALONSO, Alejandro, 28223 Pozuelo de Alarcon (MADRID) (ES)
(74) Representative: Molero Sanchez, María de las Mercedes
(86) International application number: PCT/ES2023/070792
(87) International publication number: WO 2024/153838

(57) **Abstract**

METHOD and EQUIPMENT FOR IMPROVING THE TRANSPORT OF BRINES WITH CALCIUM SULPHATE IN PRODUCTION LINES OF THE MINING INDUSTRY comprising the projection of a magnetic field, preferably with a magnetic flux in a range between 0.75 and 0.78 Wb/m2, applied perpendicularly, permanently, uniformly and at constant intervals along a pipeline (2) with a circulating flow of brine with a percentage content of calcium sulphate of between 10-70% at a temperature of up to 80°C by installing a plurality of permanent energy batteries (1) filled with magnetic material, which are arranged externally on the pipeline (2) in groups of two, incorporated at intervals separated every 10 metres.

## Description

### OBJECT OF THE INVENTION

The invention, as expressed in the statement of the present specification, relates to a method and an equipment for improving the transport of brines with calcium sulphate in production lines of the mining industry, providing advantages and characteristics, which are described in detail below, which represent an improvement to the current state of the art.

More specifically, the object of the invention focuses on a method and equipment for improving the transport of brines in the mining industry, in particular brines composed mainly of hydrated calcium sulphate, which is essentially based on the application of an autonomous physical treatment in the pipelines through which the brine runs between its production processes. More specifically, the method focuses on the projection of a magnetic field in the pipelines by installing ferromagnetic material batteries, with the main objective of causing a change in the crystalline structure of calcium sulphate by promoting the formation of its more soluble allotropic form with less tendency to precipitation on the internal walls of the pipelines through which it circulates, avoiding, among other advantages, the problem of the clog that usually occurs with said substances.

### FIELD OF APPLICATION OF THE INVENTION

The field of application of the present invention falls within the mining industry, in the field of sodium sulphate production plants, more specifically, covering sodium sulphate-based brine transport systems.

### BACKGROUND OF THE INVENTION

Currently, there are many in the mining industry that manufacture sodium sulphate as a raw material for other types of common uses (detergents, paper manufacture, food industry etc.) in very high nominal quantities. These industrial productions involved in the basic chemistry, ensure that the maintenance and functionality of the distribution lines in the factories themselves meet with the corresponding guarantees and have minimum clogs. The main objective is to maintain and ensure the stationary operating regime, minimising stops due to force majeure and/or stoppages for maintenance.

However, although methods for the recovery of sodium sulphate from brine are known and applied, it would be desirable to have a method to minimise the damage caused by calcium sulphate during transport through the pipes before the main recovery process, so common in said streams, this being the basic objective of the present invention, in particular a method based on the application of a magnetic field.

On the other hand, until now, magnetic treatment has been mainly focused on the prevention of calcium carbonate precipitation. And, although in the case of calcium sulphate, it is known that it can also be affected by a magnetic field to change its structure and avoid incrustations, the methods disclosed so far in the current state of the art are susceptible to being improved, the main objective of the present invention being the development of an improved method and equipment for applying said magnetic fields to achieve optimal results and satisfy the following objectives:
- Provide a sustainable solution in the brine distribution pipes to minimise the precipitation of calcium sulphate in sodium sulphate brines.
- Provide the mining sector with an autonomous technology without the contribution of external energy in sections of pipes through which brines circulate with the advantages that this provides. Functional even in the event of certain normal variations in the flow rate of the brine being transported.
- Minimize the stops in the transport of brines and therefore in the production processes that currently entail serious problems such as: changes of entire pipes or hydromechanical cleaning with/without highly corrosive acid products. The use of these products in turn entails risks to the safety and health of workers, directly minimising the existence of the dangers and damage associated with the workforce.
- Obtain the advantages without changing the chemical composition of the brine, maintaining its composition specifications that are a requirement for the final extraction production process in the brine. The use of any additive that alters the physical-chemical composition of the brine is not required. The cost associated with the purchase, management, dosage and control of certain additives that will no longer be necessary to minimise the damage caused by the precipitation of the compound is reduced.
- Reduce energy consumption in the pumping needs as a result of the reduction of the effective section in the pipes as a result of the clog produced by calcium sulphate.
- Provide a treatment that can be adapted to any typical diameter of pipe installed for transporting brines in the mining sector. In turn, it is very simple to install, without the need for highly qualified personnel for both the installation and the subsequent maintenance/revision thereof.
- The ability to implement this technology in pipes of any material, whether polymeric or metallic. It does not affect the materials of the same because they are completely compatible, capable of withstanding inclement weather/damage by both biotic and abiotic agents.
- Involve magnetic fields as a tool to minimise the precipitation of calcium sulphate in the pipes through which sodium sulphate brines circulate. There is no risk to the safety and health of workers.
- All these actions and competitive advantages, without the need for complex installations, practically maintenance-free, with a significant autonomous useful life, and with no added energy consumption or carbon footprint, but rather in relation to the provisions of section V, would reduce it.

### EXPLANATION OF THE INVENTION

The method and equipment for the improvement of the transport of brines with calcium sulphate in production lines of the mining industry that the invention proposes are, therefore, an improvement over what is already known that allows to satisfactorily achieve all the objectives indicated above, the characteristics detailed make it possible and that distinguish them are conveniently included in the final claims that accompany this description.

What the invention proposes, as has been noted above, is a method based essentially on the application of a physical treatment in the pipelines through which the brine runs between its productive processes consisting of the projection of a magnetic field, through the installation of batteries of ferromagnetic material in said pipelines, in such a way that it causes a change in the crystalline structure in the calcium sulphate promoting the formation of its more soluble allotropic form and, therefore, with less tendency to precipitate on the internal walls of the pipelines through which it circulates. It is a method that, advantageously, is totally autonomous and without the need for dosing of chemical products, as well as there being need for more energy input. In addition, it does not pose a risk to workers or the environment.

More specifically, the method, object of the invention, comprises the projection of a magnetic field, preferably a field with a magnetic flux in a range between 0.75 and 0.78 Wb/m², applied perpendicularly, permanently, uniformly and at constant intervals to the brine pipe, that is, the conduction pipe plus the circulating flow rate of brine the problem of which we want to solve. Specifically, on a pipeline that transports sodium sulphate brines with a percentage content of calcium sulphate and whose problems are to be solved by the clogs produced by calcium sulphate. The percentage content in this type of brine usually ranges between 10-70%, however, this percentage is not limiting for the effectiveness of the method. The brine line has a temperature that reflects its energy content, this variable is the most decisive, generally, in more extreme conditions, this variable can reach a temperature of up to 80°C. The minimum flow rate usually ranges around 50 m3/h. To relate to the diameter, the linear velocity of the flow must be considered to be greater than 0.2 m/s.

Preferably, said projection of the magnetic field is applied by means of pairs of magnetic elements, installed in the pipeline so as to provide a magnetic field perpendicular to the surrounding flux, at periodic intervals, preferably at 10 m intervals.

Preferably, the projection of the magnetic field is applied to said intervals by means of groups of two pairs of magnetic elements separated from each other at a short distance and arranged in an alternating position, such that the projection of the magnetic field of each pair has an angle of 90° with respect to the other.

Preferably, the distance at which the projection of the magnetic field of each pair of magnetic elements in each group of two is applied is approximately 10 cm.

Preferably, the projection of the magnetic field is applied, in each pair of magnetic elements, by means of permanent energy batteries filled with magnetic material.

For its part, the equipment object of the invention to carry out said method, i.e. to improve the transport of brines with calcium sulphate in the production lines, essentially comprises a series of permanent energy batteries filled with magnetic material. Specifically, a series of batteries whose internal content, composed of two pads of magnetic materials, which are defined below, are installed surrounding the pipeline on both sides so that said materials provide a magnetic field perpendicular to the circulating flow inside the pipeline.

Preferably, said batteries comprise respective housings to house each pad. These housings can be manufactured in varying dimensions to allow the pipe to be clamped on both sides, adapting to each specific pipe diameter for which they are intended, in each case.

On the other hand, the connection between the two housings that make up each battery is preferably made with metal strap to ensure the tightness of the assembly and the adequate support and fastening of the same in the pipeline, considering the high weight of the components. This ensures that safety and occupational risk prevention protocols are maintained in the industry where it is implemented. The objective of the use of this metal strap is to reinforce its fastening, minimising the possible risks associated with workers or bystanders that may be affected by a possible fall at a certain height of the battery in question.

Preferably, the external housing in which each pellet of the batteries is housed is made, by means of an extrusion mould in acrylonitrile butadiene styrene (ABS) with ends in the same material to be able to implement the support strap.

Based on the two elements discussed above, and taking, for example, as a base of length 100 linear meters of pipe, in the preferred embodiment of the equipment of the invention, 20 permanent energy batteries are installed, arranged at equidistant intervals in groups of two and alternately rotated by 90° each battery with respect to the next, relative to the axis of the conduction flow, so that the magnetic fields of each of the batteries are perpendicular to the brine flow and perpendicular to each other.

This minimises the dehydration effect of calcium sulphate as the flow passes. The phenomenon of dehydration would be the main risk that would imply an increase in the risk of crystallization and failure of the installation. With this battery equipment, the circulation of the brine without sulphate retention is favoured, maintaining a steady state as the brine is being transported.

Preferably, the equipment comprises at least 20 batteries for a 100-meter pipeline operating at a flow rate that provides a minimum linear speed of 0.2 m/s with a maximum temperature of 80°C in the circulating brine itself, since this is the usual maximum temperature at which the brine circulates.

Preferably, the distance between each group of two batteries is in a range of approximately 10 metres. And, preferably, the separation between the two batteries in each group is preferably a maximum of 10 cm.

Regarding the above, it should be noted that the brine lines in the mining sector operate transport fluid at different temperatures. The effect of temperature is the determining factor in the reduction of the usual operability in the production processes, mainly due to the precipitation of calcium sulphate. This compound can acquire different allotropic forms, from the dihydrate that has the maximum solubility, to the anhydrous form (also called anhydrite) that has the lowest solubility and therefore the greatest risk of precipitation in the pipelines and equipment of the production line. The type of allotropic form is key in order to evaluate the solubility of the corresponding salt.

The higher the temperature in the transport line, the greater the risk of dehydration, and therefore, the greater the risk of precipitation within the pipeline. This problem is very common in this sector, hindering production processes, making changes of pipes and accessories necessary, with the corresponding cost overruns. As for the chemical composition of the brine, as it is complex to determine due to the high concentrations and its fluctuations due to the non-linearity of composition in the production process, it will be characterized by the electrical conductivity of the same, observing excellent results when operating above 20,000 µS/cm with a percentage composition by mass of up to 70% in calcium sulphate. For more diluted brines whose conductivity is lower as well as with a lower percentage by mass, the results will be equally satisfactory.

The application of the magnetic field perpendicular to the circulating flow rate that the method and equipment of the present invention calls for, favours the hydration of calcium sulphate to its allotropic form of maximum hydration, which is a great advantage for the conduction of important flow rates in long ducts. The main advantage achieved with this invention is not to modify the chemical composition of the brine because it is not necessary to proceed with the dosing of chemical products of any kind. This aspect is key and vital in order to maintain the technical specifications of the final product, both for its marketing and for the production of certain chemical products.

In order for this hydration phenomenon to be maintained, the described battery equipment must be arranged in the arrangement described above in order to achieve the so-called "memory effect" of hydration. Thus, to maintain maximum hydration, the batteries must be located in groups of two separated by a maximum of 10 cm between them and with a separation between the groups of every two of 10 metres. It is recommended to maintain these distances and this arrangement even for more diluted brines, with a lower percentage by mass of calcium sulphate, to counteract possible peaks in terms of composition that the stream to be treated may experience.

On the other hand, the magnetic field associated with the batteries that reaches the maximum hydration corresponds to a field between 0.75 and 0.78 Wb/m2 with a minimum anisotropy index. This anisotropy must be characterized after the shaping of the pad by means of the corresponding evaluation/quality methods, the most important parameter to characterize the isotropy being the uniformity of the magnetic field reflected in the aforementioned range.

The following table shows the different options of sizes of brine lines available and the associated magnetic field to be able to have a wide spectrum based on the standardisation of the pipes used in this type of conduction method and thus be able to provide a solution which can be applied to multiple cases.

| Model | Pipe diameter for installation | battery dimensions | preferred magnetic field (Wb/m2) |
|---|---|---|---|
| Small industrial flow | [4"; 6"] | 296 * 180 * 100 mm | [0.75-0.78] |
| Medium industrial flow | [6"; 12"] | 456 * 230 * 110 mm | |
| Large industrial flow | >12" | 610 * 400 * 120 mm | |

Finally, to ensure the above magnetic field, minimize the anisotropy and ensure the maximum Curie temperature, considering that the greatest risk of calcium sulphate precipitation occurs at high temperatures and that therefore the effect thereof has the greatest weight, preferably, the percentage composition by mass for the magnetic material of the battery pads is as follows:

| | |
|---|---|
| Fe₂O₃ | 64 ± 2% |
| BaO | 25 ± 5% |
| Na₂O | 3.5 ± 2% |
| SiO₂ | 5.8 ± 3% |
| SO₃ | 0.5 ± 0.07% |
| Al₂O₃ | 1.2 ± 0.1% |

The method and the equipment with the described specifications represent an optimal solution to achieve the maximum hydration of calcium sulphate thanks to the associated magnetic field, orientation and magnetic properties in general (remanence, coercive force, intrinsic coercivity, maximum product energy). These specifications have some characteristic properties of permanent magnets that must be considered for installation, transport, maintenance...considering, therefore, the appropriate measures in terms of safety and health at work for transport and installation (sudden joining of the batteries due to the proximity of polarities that derive from attractive force).

Regarding the maximum energy of the product, it amounts to 25 ± 2% KJ/m3. This aspect must be considered in view of the mechanical resistance of the duct where it is intended to be installed, previously evaluating the condition and characteristics of the conduction. In general, the problem of the adhesion factor between the batteries is not excessively influential or decisive in order to be installed in any type of brine pipe (these brine pipes withstand high pressures, high density flows, exhibit resistance to external geological agents etc). The adhesion factor provided by the batteries is, by and large, bearable/admissible for the diameters, materials and thicknesses of the pipes used in the mining sector.

### DESCRIPTION OF THE DRAWINGS

To complement the description being made herein, and for the purpose of aiding a better understanding of the characteristics of the invention, the present specification is accompanied, as an integral part thereof, by a set of drawings in which the following has been represented in an illustrative and non-limiting manner:
Figure 1.- A schematic plan representation of a portion of the pipeline in which an example of the battery equipment has been installed to carry out the method for improving the transport of brines, object of the invention.
Figure 2.- An enlarged view of detail A indicated in figure 1, where the arrangement of one of the groups of two batteries comprising the equipment of the invention can be seen.
Figure 3.- A schematic representation in section of the portion of the pipeline with the group of the two batteries shown in figure 2, showing the perpendicular arrangement of the same.
Figure 4 - A schematic representation in section of one of the batteries of the equipment of the invention, showing the parts and elements, it comprises.

### PREFERRED EMBODIMENT OF THE INVENTION

In light of the aforementioned figures, and according to the adopted numbering, an example of a non-limiting embodiment of the invention of the equipment for the improvement of the transport of brines with calcium sulphate in production lines of the mining industry can be observed therein, which comprises what is indicated and described in detail below.

Thus, as can be seen in said figures, the equipment of the invention, applicable to brine pipelines (2), in particular brines composed mainly of hydrated calcium sulphate, essentially comprises a plurality of permanent energy batteries (1) filled with magnetic material, which are arranged externally on the pipeline (2) in such a way that said materials project a magnetic field perpendicular to the flow of brine circulating inside the pipeline (2), which batteries (1) are incorporated distributed at periodic intervals along the pipeline (2), so that the magnetic field projection is permanent, uniform and at constant intervals in the brine line.

Each battery (1) preferably comprises two pads (1a) of magnetic materials suitable for being located on opposite sides of the pipeline (2).

Preferably, the magnetic materials of the pads (1a) of each battery (1) are suitable for projecting a field with a magnetic flux in a range of between 0.75 and 0.78 Wb/m².

Preferably, each pad (1a) of the battery (1) has the following mass percentage composition of magnetic material:

| | |
|---|---|
| Fe₂O₃ | 64 ± 2% |
| BaO | 25 ± 5% |
| NaxO | 3.5 ± 2% |
| SiO₂ | 5.8 ± 3% |
| SO₃ | 0.5 ± 0.07% |
| Al₂O₃ | 1.2 ± 0.1% |

Preferably, the pads (1a) of the battery (1), which consist of parallelepiped pieces, are housed inside respective housings (1b) of variable dimensions to adapt to the curvature of the pipeline (2) for which the equipment is intended in each case, which housings (1b) are fastened together by means of a fastening means (3) surrounding the pipeline (2).

Preferably, the housings (1b) are made of ABS.

Preferably, the fastening means (3) of the housings (1b) is a metal strap.

Preferably, the equipment comprises the installation of groups of two batteries (1) installed on the pipeline (2) at intervals of 10 metres' distance (D) between each group, such that, for a pipeline (2) of 100 linear metres, 20 permanent energy batteries (1) are installed.

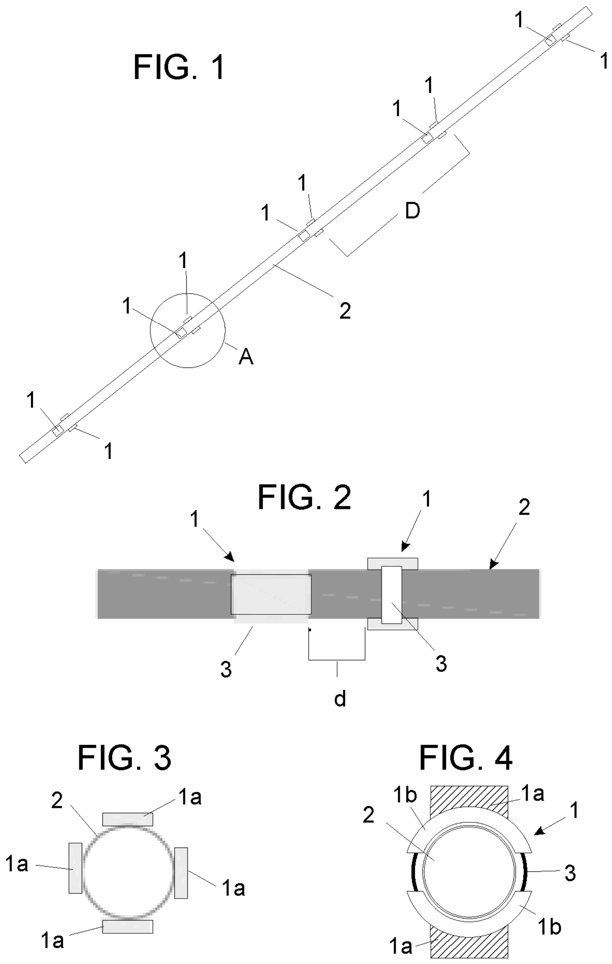

Preferably, as can be seen in figure 2, the batteries (1) of each group of two are installed alternately rotated by 90° with respect to each other with respect to the axis of the pipeline (2), so that the magnetic fields of each battery are perpendicular to the direction of circulation of the brine flow and perpendicular to each other.

This minimises the dehydration effect of calcium sulphate as the flow passes. The phenomenon of dehydration would be the main risk that would imply an increase in the risk of crystallization and failure of the installation. With this battery equipment, the circulation of the brine without sulphate retention is favoured, maintaining a steady state as the brine is being transported.

Preferably, the separation distance (d) between the two batteries (1 of each group is preferably 10 cm).

Having sufficiently described the nature of the present invention, in addition to the manner in which to put it into practice, it is not considered necessary to make its explanation more extensive in order for any person skilled in the art to understand its scope and the advantages derived from it, it being stated that, in its essence, it may be put into practice in other embodiments that differ in detail from that indicated by way of example, and to which the protection equally applies provided that its main principle is not altered, changed or modified.

## Claims

1. METHOD FOR IMPROVING THE TRANSPORT OF BRINES WITH CALCIUM SULPHATE IN PRODUCTION LINES OF THE MINING INDUSTRY **characterized in that** it comprises the projection of a magnetic field, applied perpendicularly, permanently, uniformly and at constant intervals along a brine line, that is, to a pipeline (2) with a circulating flow of brine with a percentage content of calcium sulphate of between 10-70% at a temperature of up to 80°C.

2. METHOD FOR IMPROVING THE TRANSPORT OF BRINES WITH CALCIUM SULPHATE IN PRODUCTION LINES OF THE MINING INDUSTRY, according to claim 1, **characterized in that** it comprises the projection of a field with a magnetic flux comprised in a range of between 0.75 and 0.78 Wb/m².

3. METHOD FOR IMPROVING THE TRANSPORT OF BRINES WITH CALCIUM SULPHATE IN PRODUCTION LINES OF THE MINING INDUSTRY, according to claims 1 or 2, **characterized in that** the projection of the magnetic field is applied by means of pairs of magnetic elements, installed on the pipeline so that they provide a magnetic field perpendicular to the circulating flow.

4. METHOD FOR IMPROVING THE TRANSPORT OF BRINES WITH CALCIUM SULPHATE IN PRODUCTION LINES OF THE MINING INDUSTRY, according to any of claims 1 to 3, **characterized in that** the projection of the magnetic field is applied at intervals of 10 metres.

5. METHOD FOR IMPROVING THE TRANSPORT OF BRINES WITH CALCIUM SULPHATE IN PRODUCTION LINES OF THE MINING INDUSTRY, according to claim 4, **characterized in that** the projection of the magnetic field is applied at intervals by means of groups of two pairs of magnetic elements separated from each other at a short distance and arranged in an alternating positions, such that the projection of the magnetic field of each pair presents an angle of 90° with respect to the other.

6. METHOD FOR IMPROVING THE TRANSPORT OF BRINES WITH CALCIUM SULPHATE IN PRODUCTION LINES OF THE MINING INDUSTRY, according to claim 5, **characterized in that** the distance to which the projection of the magnetic field of each pair of magnetic elements in each group of two is applied is 10 cm.

7. METHOD FOR IMPROVING THE TRANSPORT OF BRINES WITH CALCIUM SULPHATE IN PRODUCTION LINES OF THE MINING INDUSTRY, according to any of the preceding claims, **characterized in that** the projection of the magnetic field is applied by means of permanent energy batteries filled with magnetic material.

8. EQUIPMENT FOR IMPROVING THE TRANSPORT OF BRINES WITH CALCIUM SULPHATE IN PRODUCTION LINES OF THE MINING INDUSTRY **characterised in that**, it applies to brine pipelines (2), in particular brines composed mainly of hydrated calcium sulphate, and is **characterized in that** it comprises a plurality of permanent energy batteries (1) filled with magnetic material, which are arranged externally on the pipeline (2) in such a way that said materials project a magnetic field perpendicular to the flow of brine circulating inside the pipeline (2), which batteries (1) are incorporated distributed at periodic intervals along the pipeline (2), so that the magnetic field projection is permanent, uniform and at constant intervals in the brine line.

9. EQUIPMENT FOR IMPROVING THE TRANSPORT OF BRINES WITH CALCIUM SULPHATE IN PRODUCTION LINES OF THE MINING INDUSTRY according to claim 8, **characterized in that** each battery (1) comprises two pads (1a) of magnetic materials suitable to be located on opposite sides of the pipeline (2).

10. EQUIPMENT FOR IMPROVING THE TRANSPORT OF BRINES WITH CALCIUM SULPHATE IN PRODUCTION LINES OF THE MINING INDUSTRY according to claim 9, **characterized in that** the magnetic materials of the pads (1a) of each battery (1) are suitable for projecting from a field with a magnetic flux comprised in a range between 0.75 and 0.78 Wb/m².

11. EQUIPMENT FOR IMPROVING THE TRANSPORT OF BRINES WITH CALCIUM SULPHATE IN PRODUCTION LINES OF THE MINING INDUSTRY according to claim 10, **characterized in that** each pad (1a) of the battery (1) has a percentage composition by mass of magnetic material consisting of:
| | |
|---|---|
| Fe₂O₃ | 64 ± 2% |
| BaO | 25 ± 5% |
| Na₂O | 3.5 ± 2% |
| SiO₂ | 5.8 ± 3% |
| SO₃ | 0.5 ± 0.07% |
| Al₂O₃ | 1.2 ± 0.1% |

12. EQUIPMENT FOR IMPROVING THE TRANSPORT OF BRINES WITH CALCIUM SULPHATE IN PRODUCTION LINES OF THE MINING INDUSTRY according to any of claims 9 to 11, **characterized in that** the pads (1a) of the battery (1) are housed inside respective housings (1b) of variable dimensions to adapt to the curvature of the pipeline (2) to which the equipment is intended in each case, which are fastened to each other by means of a fastening means (3) surrounding the pipeline (2).

13. EQUIPMENT FOR IMPROVING THE TRANSPORT OF BRINES WITH CALCIUM SULPHATE IN PRODUCTION LINES OF THE MINING INDUSTRY according to claim 12, **characterized in that** the housings (1b) are made of ABS.

14. EQUIPMENT FOR IMPROVING THE TRANSPORT OF BRINES WITH CALCIUM SULPHATE IN PRODUCTION LINES OF THE MINING INDUSTRY according to claim 12 or 13, **characterized in that** the fastening means (3) of the housings (1b) is a metal strip.

15. EQUIPMENT FOR IMPROVING THE TRANSPORT OF BRINES WITH CALCIUM SULPHATE IN PRODUCTION LINES OF THE MINING INDUSTRY according to any of claims 8 to 14, **characterized in that** it comprises the installation of groups of two batteries (1) installed along the pipeline (2) at intervals of 10 metres' distance (D) between each group.

16. EQUIPMENT FOR IMPROVING THE TRANSPORT OF BRINES WITH CALCIUM SULPHATE IN PRODUCTION LINES OF THE MINING INDUSTRY according to claim 15, **characterized in that** the batteries (1) of each group of two are installed alternately rotated by 90° with respect to each other in relation to the axis of the pipeline (2), so that the magnetic fields of each battery are perpendicular to the direction of circulation of the brine flow and perpendicular to each other.

17. EQUIPMENT FOR IMPROVING THE TRANSPORT OF BRINES WITH CALCIUM SULPHATE IN PRODUCTION LINES OF THE MINING INDUSTRY according to claim 15 or 16, **characterized in that** the separation distance (d) between the two batteries (1 of each group) is 10 cm.
